# EUROPEAN PATENT APPLICATION

(11) **EP 4 682 214 A1**
(43) Date of publication of application: **21.01.2026**
(21) Application number: 24770119.6
(22) Date of filing: 13.03.2024
(51) Int. Cl.: C09J 7/35, C09J 7/20, H01M 50/178, H01M 50/184, H01M 50/186, H01M 50/193, H01M 50/197, H01M 50/198

(54) **HOT-MELT ADHESIVE FILM, SEALING FILM, METAL TERMINAL, BATTERY, AND DEVICE**

(30) Priority: 15.03.2023 JP 2023040957; 08.03.2024 JP 2024035795
(71) Applicant: ZACROS Corporation, Tokyo 112-0002 (JP)
(72) Inventor: KANEDA, Yasuhiro, Tokyo 112-0002 (JP); MARUYAMA, Yuiko, Tokyo 112-0002 (JP); TAKAMURA, Satoshi, Tokyo 112-0002 (JP); SAITO, Soshi, Tokyo 112-0002 (JP); FUKUI, Hiroaki, Tokyo 112-0002 (JP); CHISHIMA, Kenji, Tokyo 112-0002 (JP)
(74) Representative: Godemeyer Blum Lenze Patentanwälte Partnerschaft mbB - werkpatent
(86) International application number: PCT/IB2024/052405
(87) International publication number: WO 2024/189546

(57) **Abstract**

The present invention relates to a hot-melt adhesive film that is able to join a plurality of adherends while maintaining a certain space therebetween or is able to join a plurality of adherends in an electrically insulated state, as well as a sealing film, a metal terminal, a battery, and a device in which the layer thickness of the sealing film is hardly reduced at the corner portion of an electrode lead wire even when heat-sealing is performed at a high temperature. More specifically, the present invention relates to a hot-melt adhesive film including: a first adhesive layer that adheres to a first adherend; a second adhesive layer that adheres to a second adherend; and a base material layer provided between the first adhesive layer and the second adhesive layer, in which at least the base material layer has a storage elastic modulus at 170°C of 1 × 10⁵ Pa or more as measured with a tensile rheometer by a method in accordance with ISO 6721-4:1994, as well as a sealing film that seals between an electrode lead wire electrically connected to a battery body and a housing container that houses the battery body and that includes a first adhesive layer that adheres to the electrode lead wire, a second adhesive layer that adheres to the housing container, and a base material layer provided between the first adhesive layer and the second adhesive layer, in which at least the base material layer has a storage elastic modulus at 170°C of 1 × 10⁵ Pa or more as measured with a tensile rheometer by a method in accordance with ISO 6721-4:1994, a metal terminal, a battery, and a device.

## Description

### TECHNICAL FIELD

The present invention relates to a hot-melt adhesive film, a sealing film, a metal terminal, a battery, and a device.

### BACKGROUND ART

As a storage battery for storing electric energy, a secondary battery such as a lithium ion battery has attracted attention. As this type of secondary battery, a structure in which a battery body is housed in a container, and an electrode lead wire is drawn out to the outside of the container is known.

For example, Patent Literature 1 describes a lead wire for a nonaqueous electrolyte battery in which an insulator that coats a lead conductor and is fused to an inner surface of a bag body includes a crosslinked layer made of a crosslinked polyolefin resin.

Patent Literature 2 describes a lead wire for a nonaqueous electrolyte battery including a first insulating layer directly covering at least a part of a lead conductor and a second insulating layer covering the first insulating layer, in which the second insulating layer is a crosslinked body of a resin composition containing an olefin crystal-ethylene butene-olefin crystal block polymer and polypropylene.

### CITATION LIST

### Patent Literature

Patent Literature 1: Japanese Unexamined Patent Application, First Publication No. 2001-102016
Patent Literature 2: International Publication WO 2018/074090

### SUMMARY OF INVENTION

### TECHNICAL PROBLEM

When a space between an electrode lead wire and a housing container is sealed using a sealing film by heat-sealing at a high temperature, the layer thickness of the sealing film may be reduced at a corner portion of the electrode lead wire.

The present invention has been made in view of the above circumstances, and it is an objective of the present invention to provide a hot-melt adhesive film that is able to join a plurality of adherends while maintaining a certain space therebetween or is able to join a plurality of adherends in an electrically insulated state. Another objective of the present invention is to provide a sealing film, a metal terminal, a battery, and a device in which the layer thickness of the sealing film is hardly reduced at a corner portion of an electrode lead wire even when heat-sealing is performed at a high temperature.

### SOLUTION TO PROBLEM

In order to solve the above problem, the present invention provides a hot-melt adhesive film including: a first adhesive layer that adheres to a first adherend; a second adhesive layer that adheres to a second adherend; and a base material layer provided between the first adhesive layer and the second adhesive layer, in which at least the base material layer has a storage elastic modulus at 170°C of 1 × 10⁵ Pa or more as measured with a tensile rheometer by a method in accordance with ISO 6721-4:1994.

The first adhesive layer, the second adhesive layer, and the base material layer are preferably composed of a polyolefin-based resin.

The present invention also provides a sealing film that seals between an electrode lead wire electrically connected to a battery body and a housing container that houses the battery body, in which the sealing film includes a first adhesive layer that adheres to the electrode lead wire, a second adhesive layer that adheres to the housing container, and a base material layer provided between the first adhesive layer and the second adhesive layer, and at least the base material layer has a storage elastic modulus at 170°C of 1 × 10⁵ Pa or more as measured with a tensile rheometer by a method in accordance with ISO 6721-4:1994.

At least the base material layer preferably has a storage elastic modulus at 170°C of 1 × 10⁵ Pa or more and 1 × 10⁶ Pa or less as measured with a tensile rheometer by a method in accordance with ISO 6721-4:1994.

Preferably, the electrode lead wire is a metal terminal electrically connected to an electrode of a battery element, and the housing container is a packaging material that seals the battery element.

The first adhesive layer preferably contains an acid-modified polyolefin resin.

The present invention also provides a metal terminal in which the sealing film is attached to a part of a surface of the metal terminal.

Furthermore, the present invention provides a battery having the metal terminal.

Furthermore, the present invention provides a device using the battery as a power source.

### ADVANTAGEOUS EFFECTS OF INVENTION

According to the present invention, it is possible to provide a hot-melt adhesive film that is able to join a plurality of adherends while maintaining a certain space therebetween or is able to join a plurality of adherends in an electrically insulated state and that has a short circuit preventing effect. Furthermore, according to the present invention, it is possible to provide a sealing film, a metal terminal, a battery, and a device in which the layer thickness of the sealing film is hardly reduced at a corner portion of an electrode lead wire even when heat-sealing is performed at a high temperature.

### BRIEF DESCRIPTION OF DRAWINGS

Fig. 1 is a cross-sectional view illustrating an example of a hot-melt adhesive film or a sealing film of the present embodiment.
Fig. 2 is a perspective view illustrating an example of an electrode lead wire to which a sealing film is attached.
Fig. 3 is a perspective view illustrating an example of a battery.

### DESCRIPTION OF EMBODIMENTS

Hereinafter, the present invention will be described based on preferred embodiments.

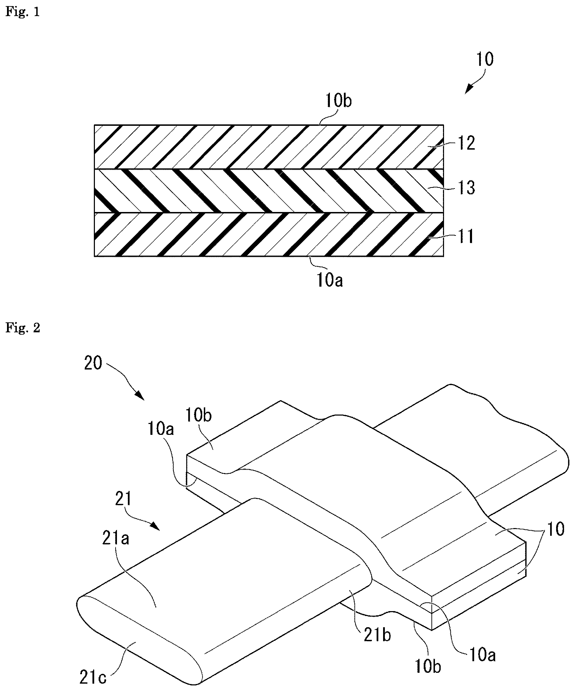

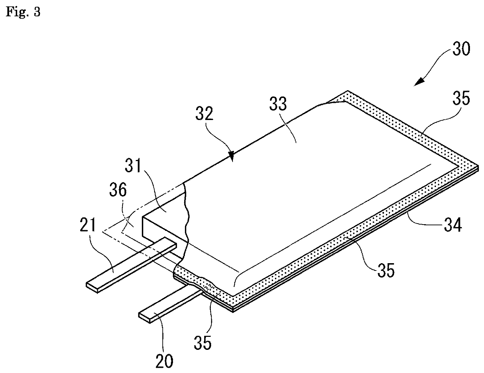

Fig. 1 is a view illustrating an example of a hot-melt adhesive film or a sealing film of the present embodiment. Fig. 2 is a view illustrating an example of an electrode lead wire to which a sealing film is attached. Fig. 3 is a view illustrating an example of a battery. These drawings are for explaining the concept, and dimensions, ratios, and the like of the components may be different from actual ones.

As illustrated in Fig. 3, a battery 30 includes a battery body 31 serving as a power generating element, a housing container 32 housing the battery body 31, and an electrode lead wire 21 electrically connected to the battery body 31. The electrode lead wire 21 may be, for example, a metal terminal. As illustrated in Fig. 2, sealing films 10 are provided on both sides of the electrode lead wire 21 in the thickness direction.

### <Sealing film>

The sealing film 10 of the present embodiment is used for sealing between the electrode lead wire 21 electrically connected to the battery body 31 and the housing container 32 housing the battery body 31.

As illustrated in Fig. 1, the sealing film 10 may be a laminate having a plurality of layers. Specifically, the sealing film 10 includes a first adhesive layer 11 that adheres to the electrode lead wire 21, a second adhesive layer 12 that adheres to the housing container 32, and a base material layer 13 provided between the first adhesive layer 11 and the second adhesive layer 12. In the following description, the first adhesive layer 11 and/or the second adhesive layer 12 may be collectively referred to as adhesive layers 11 and 12.

The first adhesive layer 11 is laminated on a surface 10a on the side where the sealing film 10 adheres to the electrode lead wire 21. The second adhesive layer 12 is laminated on a surface 10b on the side where the sealing film 10 adheres to the housing container 32. The base material layer 13 may be directly laminated with the adhesive layers 11 and 12. Although not particularly illustrated, another layer may be laminated between the adhesive layers 11 or 12 and the base material layer 13.

### <Base material layer>

The sealing film 10 in the illustrated example has a base material layer 13 between the first adhesive layer 11 and the second adhesive layer 12. The base material layer 13 may have one layer, and although not particularly illustrated, the base material layer 13 may have two or more layers.

At least the base material layer 13 has a storage elastic modulus at 170°C of 1 × 10⁵ Pa or more as measured with a tensile rheometer by a method in accordance with ISO 6721-4:1994. In a more preferred aspect, at least the base material layer 13 has a storage elastic modulus at 170°C of 1 × 10⁵ Pa or more and 1 × 10⁶ Pa or less as measured with a tensile rheometer by a method in accordance with ISO 6721-4:1994.

The base material layer 13 may contain a polyolefin resin, an acid-modified polyolefin resin, or both an unmodified polyolefin resin and an acid-modified polyolefin resin. From the viewpoint of heat resistance of the base material layer 13, the melting point of the resin is preferably high, and the resin may be acid-modified or unmodified, but is preferably a polypropylene resin.

The resin contained in the base material layer 13 may be crosslinked by irradiation with energy rays and/or a crosslinking aid. Examples of the energy rays include at least one selected from ultraviolet rays, X-rays, gamma rays, electron beams, and the like. In the case of crosslinking with ultraviolet rays, a photopolymerization initiator may be added to the resin to facilitate the initiation of the crosslinking reaction.

The crosslinking aid is not particularly limited, but a compound capable of crosslinking the resin by irradiation with energy rays is preferable. Examples thereof include at least one selected from compounds having two or more unsaturated bonds in one molecule, such as a vinyl group, an allyl group, an acryloyl group, and a methacryloyl group. An example of the unsaturated bond is an olefinic carbon-carbon double bond.

An example of the crosslinking aid is a polyfunctional vinyl compound.

Examples of the polyfunctional vinyl compound include a polyfunctional (meth)acrylate compound, a polyfunctional (meth)acrylamide compound, triallyl isocyanurate, triallyl cyanurate, and trimethallyl isocyanurate. Here, (meth)acrylate is an abbreviation of acrylate and/or methacrylate, and (meth)acrylamide is an abbreviation of acrylamide and/or methacrylamide.

Examples of the polyfunctional (meth)acrylate compound include ethylene glycol di(meth)acrylate, trimethylolpropane tri(meth)acrylate, pentaerythritol tetra(meth)acrylate, pentaerythritol tri(meth)acrylate, and di(trimethylolpropane) tetraacrylate.

Examples of the polyfunctional (meth)acrylamide compound include N,N'-methylenebisacrylamide, polyethylene glycol bisacrylamide, and N-[tris(3-acrylamidopropoxymethyl)methyl] acrylamide.

Examples of the acid-modified polyolefin resin include an acid-modified polypropylene resin and an acid-modified polyethylene resin. Examples of the unmodified polyolefin resin include an unmodified polypropylene resin and an unmodified polyethylene resin. From the viewpoint of heat resistance, the melting point of the resin is preferably high, an acid-modified polypropylene resin is preferably used as the acid-modified polyolefin resin, and an unmodified polypropylene resin is preferably used as the unmodified polyolefin resin.

An example of the acid-modified polyolefin resin is a modified polyolefin resin having a functional group of a carboxylic acid or a carboxylic anhydride in the molecular structure. In the acid modification of the polyolefin resin, an unsaturated carboxylic acid or an unsaturated carboxylic anhydride can be used as a modification monomer. Examples of the unsaturated carboxylic acid include acrylic acid, methacrylic acid, and maleic acid. The unsaturated carboxylic anhydride is not particularly limited, and examples thereof include unsaturated dicarboxylic anhydrides such as maleic anhydride.

In the present specification, the polyolefin resin may be an acid-modified polyolefin resin or an unmodified polyolefin resin. The unmodified polyolefin resin may be a polyolefin resin that is not acid-modified and is modified with a functional group (for example, a hydroxyl group or the like) other than an acid or an acid anhydride, or may be a polyolefin resin having no polar functional group.

The polyolefin resin is a resin in which the monomer contains an olefin-based monomer as a main component. Specifically, the ratio of the olefin-based monomer is preferably 50 mass% or more and more preferably 80 mass% or more, with respect to the total mass of the polyolefin resin. Examples of the olefin-based monomer include ethylene, propylene, 1-butene, isobutylene, 1-hexene, and 1-octene.

### <First adhesive layer and Second adhesive layer>

The first adhesive layer 11 preferably contains an acid-modified polyolefin resin. The first adhesive layer 11 preferably contains an acid-modified polyolefin resin as a main component. Specifically, the ratio of the acid-modified polyolefin resin is preferably 50 mass% or more and more preferably 80 mass% or more, with respect to the total mass of the first adhesive layer 11. The first adhesive layer 11 may contain both an unmodified polyolefin resin and an acid-modified polyolefin resin.

The second adhesive layer 12 may contain a polyolefin resin, may contain an unmodified polyolefin resin, may contain an acid-modified polyolefin resin, or may contain both an unmodified polyolefin resin and an acid-modified polyolefin resin. The second adhesive layer 12 may be a layer made of a thermoplastic resin other than a polyolefin resin. Further, the second adhesive layer 12 may not contain an acid-modified polyolefin resin. The composition of the second adhesive layer 12 may be the same as or different from the composition of the first adhesive layer 11.

The adhesive layers 11 and 12 are preferably polyolefin resin layers. The adhesive layers 11 and 12 may contain a resin other than an acid-modified polyolefin resin. From the viewpoint of heat resistance of the adhesive layers 11 and 12, the melting point of the resin is preferably high, and the resin may be acid-modified or unmodified, but is preferably a polypropylene resin.

The acid-modified polyolefin resin and the unmodified polyolefin resin used for the adhesive layers 11 and 12 may be selected from the same ranges as those of the acid-modified polyolefin resin and the unmodified polyolefin resin described as the material of the base material layer 13. The resin used for the adhesive layers 11 and 12 may be the same as or different from the resin used for the base material layer 13. The adhesive layers 11 and 12 may further contain an additive. The additive is not particularly limited, and examples thereof include an antioxidant, a lubricant, an antiblocking agent, a stabilizer, an antistatic agent, a coloring material, a filler, a crosslinking agent, and a crosslinking aid. The composition of the adhesive layers 11 and 12 can be appropriately selected from the viewpoint of adhesiveness, and may be the same composition as that of a known adhesive layer.

### <Electrode lead wire member>

An electrode lead wire member 20 illustrated in Fig. 2 includes an electrode lead wire 21 and a pair of sealing films 10. The electrode lead wire 21 may be a metal terminal electrically connected to an electrode (not illustrated) of a battery element in the battery body 31. The battery 30 has a metal terminal to which the sealing film 10 is attached. Such a battery 30 can be used as a power source of a device. The device using the battery 30 as a power source is not particularly limited, and examples thereof include various electronic devices.

The housing container 32 is a packaging material that seals the battery body 31, and in particular, a battery element (not illustrated) is sealed in the housing container 32. The sealing film 10 is attached to a part of a surface of the metal terminal of the electrode lead wire 21. The pair of sealing films 10 is disposed such that surfaces 10a on a side to adhere to the electrode lead wire 21 face each other and sandwich the electrode lead wire 21. The pair of sealing films 10 can be in contact with the entire circumference of the electrode lead wire 21 as a whole.

The metal terminal of the electrode lead wire 21 has conductivity and extends in one direction. End portions 21c are provided at both ends in the direction in which the electrode lead wire 21 extends. One end portion 21c is connected to the battery body 31, and the other end portion 21c is drawn out to the outside of the housing container 32. The shape of the electrode lead wire 21 along the extending direction may be linear or curved.

The material of the metal terminal is not particularly limited, and examples thereof include aluminum, copper, nickel, iron, gold, platinum, and an alloy containing at least one of these metals. Aluminum (Al) or copper (Cu) is preferable because aluminum (Al) or copper (Cu) has excellent conductivity and is advantageous in terms of cost. The surface of copper may be subjected to nickel (Ni) plating. The battery 30 may have an Al terminal and an Ni-plated Cu terminal.

Although not particularly illustrated, the electrode lead wire 21 may have a surface treatment layer on at least a part of a surface of the metal terminal. The surface treatment layer has corrosion resistance. The term "corrosion resistance" means a property of being hardly corroded by an electrolytic solution inside a battery. The surface treatment layer is preferably formed at least in a region of the electrode lead wire 21 to which the sealing film 10 is bonded. When the electrode lead wire 21 has main surfaces 21a on both sides in the thickness direction, the surface treatment layer may be formed on the main surfaces 21a and side surfaces 21b. The surface treatment layer may be omitted as a whole.

The surface treatment layer is not particularly limited, and examples thereof include an acid-resistant film formed from a material containing a phosphate, a chromate, a fluoride, and a triazinethiol compound. The surface treatment layer may contain a crosslinkable resin. Specific examples of the surface treatment include, but are not particularly limited to, a chromic acid-based treatment such as a chromate treatment; a non-chromic acid-based treatment such as a zirconium treatment, a triazinethiol treatment, and a zinc phosphate-based treatment; and a hydration oxidation treatment, an anodization treatment, a passivation treatment, and a chemical conversion treatment.

### <Housing container>

The housing container 32 illustrated in Fig. 3 includes a container body 33 and a container lid 34. The housing container 32 can be integrated by forming a sealing portion 35 on the peripheral edge portions of the container body 33 and the container lid 34. At least one of the container body 33 and the container lid 34 may have a concave molded portion 36 for housing the battery body 31 by drawing an exterior material. In the illustrated example, the molded portion 36 is formed only to the container body 33 but may also be formed to the container lid 34.

The exterior material may be, for example, a laminate having one or more resin layers on each surface of a metal foil. The exterior material may have flexibility such as a laminated film or a laminated sheet that can be wound in a roll shape. The resin layer is not particularly limited, but suitable examples thereof include resin films of a polyamide resin such as nylon, a polyester such as polyethylene terephthalate (PET), and a polyolefin resin such as polypropylene. The metal foil is not particularly limited, but suitable examples thereof include an aluminum foil, a stainless foil, a copper foil, and an iron foil.

An optional layer can be interposed between the resin layer and the metal foil of the exterior material as necessary. A surface treatment layer having corrosion resistance may be provided on a surface of the metal foil. The resin layer and the metal foil may be bonded to each other via an adhesive layer. The exterior material may have a printing layer, a coating layer, and the like on the outside of the metal foil.

The exterior material may have two or more resin layers. One or more resin layers may be laminated on the inside of the metal foil. One or more resin layers may be laminated on the outside of the metal foil. When the exterior material has the metal foil, a barrier property can be imparted to gases such as water vapor and oxygen. In order to ensure electrical insulation to the metal foil, an insulating material such as a resin layer is laminated.

Each of the surface of the container body 33 on the side in contact with the container lid 34 and the surface of the container lid 34 on the side in contact with the container body 33 preferably has a sealant resin layer. In the sealing portion 35, the sealant resin layers of the container body 33 and the container lid 34 are faced each other and thermally fused, so that the housing container 32 can be integrated.

Examples of the resin (sealant resin) used for the sealant resin layer of the housing container 32 include polyolefin resins such as a polypropylene resin. The sealant resin may be an acid-modified resin or a non-acid-modified resin.

The housing container 32 is bonded to the electrode lead wire 21 via the sealing film 10. Therefore, it is preferable that the sealant resin layer is provided on the surface of the housing container 32 on the side in contact with the sealing film 10. Furthermore, when the surface 10b of the sealing film 10 on the side to adhere to the housing container 32 is a polyolefin resin such as a polypropylene resin, heat fusion between the housing container 32 and the sealing film 10 is facilitated, which is preferable.

The electrode lead wire 21 preferably has a shape in which the side surface 21b has a cross section of a semicircular shape, a polygonal shape, or the like, and the thickness is reduced. For example, the side surfaces 21b on both sides in the width direction may have at least two or more surfaces between the pair of main surfaces 21a, and the cross section of the electrode lead wire 21 may have a substantially hexagonal to octagonal shape. Accordingly, a gap can be suppressed at a position where the electrode lead wire 21 is sandwiched between the pair of sealing films 10.

The inside of the housing container 32 may contain an electrolyte. An example of the battery is a secondary battery such as a lithium ion battery. The electrolyte of the battery may be liquid (electrolytic solution), gel, solid, or the like. The electrolyte may contain a fluorine compound such as LiPF₆, LiBF₄, or LiN(SO₂F)₂.

The electrolyte may contain carbonate esters such as ethylene carbonate (EC), propylene carbonate (PC), dimethyl carbonate (DMC), diethyl carbonate (DEC), and ethyl methyl carbonate (EMC) as a medium. One or more kinds of media may be contained.

According to the sealing film 10 described above, the layer thickness of the sealing film 10 is hardly reduced at the corner portion of the electrode lead wire 21, even when the space between the electrode lead wire 21 and the housing container 32 is heat-sealed at a high temperature.

### <Hot-melt adhesive film>

A hot-melt adhesive film 10 of the present embodiment can join a plurality of adherends while maintaining a certain space therebetween or join a plurality of adherends in an electrically insulated state and has a short circuit preventing effect.

The hot-melt adhesive film 10 of the present embodiment may be a laminate having a plurality of layers. Specifically, the hot-melt adhesive film 10 includes a first adhesive layer 11 that adheres to a first adherend, a second adhesive layer 12 that adheres to a second adherend, and a base material layer 13 provided between the first adhesive layer 11 and the second adhesive layer 12.

The base material layer may be directly laminated with the first adhesive layer and the second adhesive layer, or another layer may be laminated between the first adhesive layer or the second adhesive layer and the base material layer. Since the first adhesive layer, the second adhesive layer, and the base material layer in the hot-melt adhesive film are the same as the first adhesive layer, the second adhesive layer, and the base material layer in the sealing film described above, detailed description thereof is omitted.

Since the hot-melt adhesive film of the present embodiment is excellent in thermal adhesiveness, the hot-melt adhesive film can be used for thermal adhesion of various adherends such as metal, plastics, ceramics, and wood. Especially, the hot-melt adhesive film of the present embodiment can maintain excellent adhesiveness even when the ambient temperature is high, and thus, for example, is suitable for adhesion of various members in which a decrease in adhesive strength at a high temperature is a problem and various members in which electrical insulation at a high temperature is required. For example, the hot-melt adhesive film of the present embodiment is suitably used for thermal adhesion of interior materials and various building materials of automobiles, batteries such as fuel cells and secondary batteries, and the like. Especially, the hot-melt adhesive film of the present embodiment is suitably used as an adhesive material for a separator of a fuel cell or as a sealing material between an electrode lead wire and an exterior body of a secondary battery.

The metal adherend is not particularly limited, and examples thereof include metals and alloys such as aluminum, copper, iron, nickel, lead, stainless steel, and solder.

The plastic adherend is not particularly limited, and examples thereof include a polyolefin-based resin, a polyester-based resin, a polyamide-based resin, and a polyether-based resin.

Although the present invention has been described based on preferred embodiments, the present invention is not limited to the above-described embodiments, and various modifications can be made without departing from the gist of the present invention. Examples of the modification include addition, replacement, omission, and other modifications of components in each embodiment.

### EXAMPLES

Hereinafter, the present invention will be specifically described with reference to examples.

### <Sealing film>

A resin and a crosslinking aid shown in Table 1 were kneaded to prepare pellets, and a resin sheet having a thickness of 50 µm was prepared by a cast film forming machine. The resin sheet and a deoxidizing agent were sealed with an aluminum packaging material, and the resin sheet was crosslinked by irradiation with gamma rays so as to have the irradiation amount shown in Table 1 after oxygen in the aluminum packaging material was sufficiently reduced, thereby obtaining a base material sheet to serve as a base material layer. The storage elastic modulus of the obtained base material sheet was measured by the method described later.

**[Table 1]**

| | | Example 1 | Example 2 | Example 3 | Example 4 | Example 5 | Example 6 | Example 7 | Example 8 | Comparative Example 1 |
|---|---|---|---|---|---|---|---|---|---|---|
| Resin [wt%] | | Resin A | | | Resin B | Resin C | Resin D | Resin E | Resin F | |
| | | 95 | 95 | 95 | 97.5 | 95 | 95 | 97.5 | 95 | 100 |
| Crosslinking aid [wt%] | | 5 | 5 | 5 | 2.5 | 5 | 5 | 2.5 | 5 | 0 |
| Irradiation amount [kGv] | | 0 | 100 | 150 | 100 | 100 | 100 | 100 | 100 | 100 |
| MFR g/10 min] | | | 5.7 | | 6.3 | 7 | 7.5 | 4.2 | 6 | |
| Storage elastic modulus [Pa] | Temperature [°C] | | | | | | | | | |
| | 40 | 1.9E+8 | 2.7E+8 | 1.5E+8 | 2.5E+8 | 4.5E+8 | 4.5E+8 | 1.0E+8 | 3.3E+8 | 3.3E+8 |
| | 80 | 6.1E+7 | 7.3E+7 | 6.7E+7 | 7.9E+7 | 9.9E+7 | 1.0E+8 | 7.6E+7 | 1.2E+8 | 1.2E+8 |
| | 120 | 7.6E+6 | 6.1E+6 | 4.9E+6 | 7.1E+6 | 9.2E+6 | 9.2E+6 | 2.7E+8 | 3.6E+7 | 3.6E+7 |
| | 170 | 8.2E+5 | 9.1E+5 | 1.0E+6 | 4.0E+5 | 3.1E+5 | 2.5E+5 | 2.3E+5 | 3.3E+5 | |
| | 200 | - | 9.7E+5 | 1.1E+6 | 3.8E+5 | 3.0E+5 | 2.5E+5 | 2.1E+5 | 2.4E+5 | - |

Resins A to F shown in Table 1 are as follows. MAH represents maleic anhydride, and PP represents polypropylene. MAH-modified random PP1 and MAH-modified random PP2 distinguish different types of MAH-modified random PPs. Resin D and Resin F are not acid-modified.
Resin A: MAH-modified random PP1
Resin B: a resin obtained by blending MAH-modified random PP1 and MAH-modified random PP2 at a weight ratio of 1:1
Resin C: MAH-modified random PP2
Resin D: random PP
Resin E: a resin obtained by blending MAH-modified random PP1 and MAH-modified block PP at a weight ratio of 1:1
Resin F: block PP

The crosslinking aid used in Table 1 is triallyl isocyanurate (TAIC (registered trademark) manufactured by Mitsubishi Chemical Corporation).

The MFR shown in Table 1 is the melt flow rate of Resins A to F before the addition of the crosslinking aid.

For the value of the storage elastic modulus shown in Table 1, a × 10⁶ is described in the form of "aE + b". Details of the method for measuring the storage elastic modulus with a tensile rheometer by a method in accordance with ISO 6721-10:1999 are as follows.

As the tensile rheometer, RSA-G2 manufactured by TA Instruments was used. A base material sheet (thickness: about 0.05 mm) was punched into a length of 50 mm and a width of about 5 mm to obtain a test piece, an accurate width of the test piece was measured with calipers, an accurate thickness was measured with a dial gauge, and the test piece was set in a tensile rheometer at a distance between chucks of 20 mm. Under the air atmosphere, the temperature was raised from 20°C to 200°C at 5°C/min, and measurement was performed in a transducer mode with a spring as a normal force transducer, a cycle of 1 Hz, a strain of 0.01%, and a sampling rate of 1 pts/sec.

The sealing film was produced by bonding maleic anhydride-modified PP resin layers (thickness: 25 µm) as the first adhesive layer and the second adhesive layer to both surfaces of the base material sheet (thickness: 50 µm) obtained in each of Examples 1 to 8 and Comparative Example 1. The layer configuration of the sealing film is first adhesive layer/base material layer/second adhesive layer.

In the sealing films obtained in Examples 1 to 8, the base material layer has a storage elastic modulus at 170°C of 1 × 10⁵ Pa or more and is excellent in heat resistance, so that even when heat-sealing is performed at a high temperature, the layer thickness of the sealing film is hardly reduced at the corner portion of the electrode lead wire.

In the sealing film obtained in Comparative Example 1, the base material sheet was melted and cut at 170°C or higher, and therefore the storage elastic modulus could not be measured.

### <Hot-melt adhesive film>

In the same manner as the sealing film, a hot-melt adhesive film was produced by bonding maleic anhydride-modified PP resin layers (thickness: 25 µm) as the first adhesive layer and the second adhesive layer to both surfaces of the base material sheet (thickness: 50 µm) obtained in each of Examples 1 to 8. The layer configuration of the hot-melt adhesive film is first adhesive layer/base material layer/second adhesive layer.

The obtained hot-melt adhesive film was sandwiched between an aluminum plate having a width of 10 mm and a polypropylene resin film having a width of 10 mm, and thermally welded at 180°C for 3 seconds. An attempt was made to measure the peel strength between the aluminum plate and the polypropylene resin film, but peeling was not caused until cohesive fracture of the hot-melt adhesive film occurred.

### REFERENCE SIGNS LIST

- 10: Sealing film, hot-melt adhesive film
- 10a: Surface to adhere to electrode lead wire
- 10b: Surface to adhere to housing container
- 11: First adhesive layer
- 12: Second adhesive layer
- 13: Base material layer
- 20: Electrode lead wire member
- 21: Electrode lead wire
- 21a: Main surface of metal terminal
- 21b: Side surface of metal terminal
- 21c: End portion of metal terminal
- 30: Battery
- 31: Battery body
- 32: Housing container
- 33: Container body
- 34: Container lid
- 35: Sealing portion
- 36: Molded portion

## Claims

1. A hot-melt adhesive film comprising:
a first adhesive layer that adheres to a first adherend;
a second adhesive layer that adheres to a second adherend; and
a base material layer provided between the first adhesive layer and the second adhesive layer,
wherein at least the base material layer has a storage elastic modulus at 170°C of 1 × 10⁵ Pa or more as measured with a tensile rheometer by a method in accordance with ISO 6721-4:1994.

2. The hot-melt adhesive film according to claim 1, wherein the first adhesive layer, the second adhesive layer, and the base material layer are composed of a polyolefin-based resin.

3. A sealing film that seals between an electrode lead wire electrically connected to a battery body and a housing container that houses the battery body, wherein
the sealing film includes a first adhesive layer that adheres to the electrode lead wire, a second adhesive layer that adheres to the housing container, and a base material layer provided between the first adhesive layer and the second adhesive layer, and
at least the base material layer has a storage elastic modulus at 170°C of 1 × 10⁵ Pa or more as measured with a tensile rheometer by a method in accordance with ISO 6721-4:1994.

4. The sealing film according to claim 3, wherein at least the base material layer has a storage elastic modulus at 170°C of 1 × 10⁵ Pa or more and 1 × 10⁶ Pa or less as measured with a tensile rheometer by a method in accordance with ISO 6721-4:1994.

5. The sealing film according to claim 3 or 4, wherein the electrode lead wire is a metal terminal electrically connected to an electrode of a battery element, and the housing container is a packaging material that seals the battery element.

6. The sealing film according to any one of claims 3 to 5, wherein the first adhesive layer contains an acid-modified polyolefin resin.

7. A metal terminal, wherein the sealing film according to any one of claims 3 to 6 is attached to a part of a surface of the metal terminal.

8. A battery comprising the metal terminal according to claim 7.

9. A device using the battery according to claim 8 as a power source.
